# EUROPEAN PATENT APPLICATION

(11) **EP 1 427 201 A2**
(43) Date of publication of application: **09.06.2004**
(21) Application number: 03018838.7
(22) Date of filing: 19.08.2003
(51) Int. Cl.: H04N 5/76

(54) **Information recording and playback apparatus**

(30) Priority: 29.11.2002 JP 2002348713
(71) Applicant: Kabushiki Kaisha Toshiba, Tokyo (JP)
(72) Inventor: Hashiya, Kazuyo, Toshiba Corporation, Minato-ku, Tokyo 105-8001 (JP); Ito, Masahiro, Toshiba Corporation, Minato-ku, Tokyo 105-8001 (JP)
(74) Representative: Henkel, Feiler & Hänzel

(57) **Abstract**

An recording and playback apparatus (1) acquires, from a server (299), a mail containing recording conditions transmitted from a portable terminal (201), under various operation conditions including a standby state in which a main power of the recording and playback apparatus is off. Thereby, recording starting and recording ending of information, that is, a recording programming can be securely set in the recording and playback apparatus.

## Description

This invention relates to an information recording and playback apparatus which can record and play back information. In particular, it relates to an information recording and playback apparatus, wherein start and end of information recording can be set from outside.

In information recording and playback apparatuses which play back or record an information medium storing video data, such as image information, and control information, the following are set with the apparatus main body or an accompanying remote control device: recording start date and time/recording end date and time; recording source; and recording rate and recording system (sound recording system), etc (hereinafter simply referred to as "recording programming"). Thereby, a desired (preselected) recording source is recorded on the preselected date and time, with the predetermined recording rate and recording system.

Nowadays, information recording and playback apparatuses are in practical use, which can reduce an amount of the information to be inputted with the apparatus main body or a remote control device. In such apparatuses, a recording programming code called "G code" is inputted instead of predetermined data determined by broadcasters, such as recording (broadcasting) start date and time/recording (broadcasting) end date and time and recording source, in the data used for recording programming.

Further, Jpn. Pat. Appln. KOKAI Publication No. 8-306097 discloses a remote control device, which has an extension setting section and can extend the recording end time by 15 minutes for each operation of the extension setting section, in such a case where the broadcasting time of the program being recorded has been extended and its end time has been changed, or it has been found before start of recording that wrong recording end time was inputted.

However, these techniques have a problem that the user cannot change the input recording programming information or add a new recording programming, if the user cannot return from a position distant from the information recording and playback apparatus, or if the user is out, after recording programming.

According to an aspect of the present invention, there is provided an information recording and playback apparatus comprising: an information recording and playback section which records information on a recording medium, and plays back prestored information from a recording medium; a timer section which operates the information recording and playback section at a predetermined operation starting time, and stops the information recording and playback section at a predetermined operation ending time; a memory section which holds operation information of the timer section; a communications control section which inputs and sets the operation starting time and the operation ending time to the timer section from outside; a main-power internally-controllable switch, which always energizes to the timer section, and selectively energizes to the information recording and playback section and the communications control section by external operation or management of the timer section; a radio clock section which receives a standard value used for time correction of the timer section from the outside; and a main control section which controls operations of the information recording and playback section, the timer section, the main-power internally-controllable switch and the radio clock receiving section, with reference to the operation starting time and the operation ending time supplied through the communications control section.

According to another aspect of the present invention, there is provided an information recording and playback apparatus which records and plays back video data, the apparatus comprising: means for receiving a recording programming mail including recording programming contents from outside in a predetermined condition; and means for entering a recording programming in accordance with a recording programming contents in a programming mail acquiring by the receiving means.

According to still another aspect of the present invention, there is provided a method entering and acquiring a recording programming contents from outside with a recording programming mail using an information recording and playback apparatus comprising: receiving a recording programming mail including recording programming contents from outside; and entering a recording programming in accordance with a recording programming contents in a programming mail acquiring by a receiving means.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic block diagram showing an example of a recording and playback apparatus to which an embodiment of the present invention is applicable;
FIG. 2 is a schematic diagram showing an example of arrival of mails on the recording and playback apparatus, sending of mails from the recording and playback apparatus, and transmission and reception of mails between a mail server and a portable terminal;
FIG. 3 is a schematic diagram illustrating an example of a screen of setting a mail recording programming function;
FIG. 4 is a flow chart illustrating a method of receiving a mail when a main power is on;
FIG. 5 is a flow chart illustrating another method of receiving a mail when a main power is on;
FIG. 6 is a flow chart illustrating a method of receiving a mail when a main power is off;
FIG. 7 is a flow chart illustrating a method of receiving a mail when a programmed recording has been completed;
FIG. 8 is a flow chart illustrating a method of receiving a mail when a programmed recording has been completed, if the apparatus is set to turn off the main power after the operation has been completed;
FIG. 9 is a flow chart illustrating an example of receiving a mail, by turning on the main power by MPU mail starting processing when the main power is off; and
FIG. 10 is a flow chart illustrating another example of receiving a mail, by turning on the main power by MPU mail starting processing when the main power is off.

An embodiment of the present invention is being explained in detail with reference to drawings.

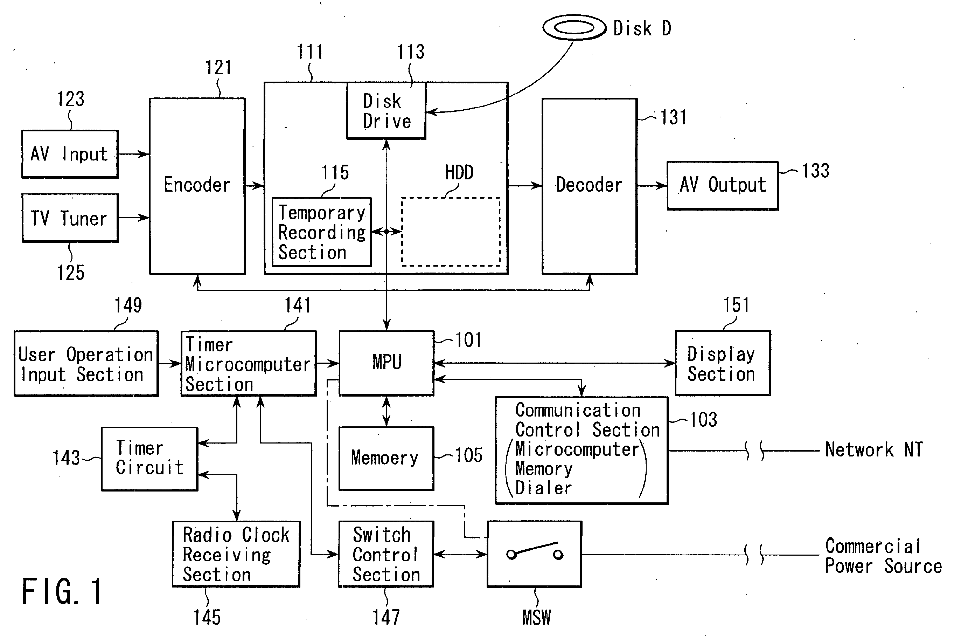

A recording and playback apparatus 1 shown in FIG. 1 comprises an information recording and playback section 111 which can record input information in a predetermined recording medium and play back information stored already in a recording medium in response to a playback operation, and a microcomputer (MPU, that is, a main control unit) 101 which controls recording in, and playback from, the information recording and playback section 11, and operations of sections explained below.

The information recording and playback section 111 comprises a disk drive unit 113 which can record information in, and play back information from, a disk D manufactured in compliant with the DVD (Digital Versatile Disk) standard, and a temporary recording section 115 functioning as a buffer memory, which can temporarily hold a certain amount of data to be recorded in, or data reproduced from, a disk D set in the disk drive unit 113.

In the case where, for example, all the available memory of the disk D has been filled during recording, the temporary recording section 115 temporarily holds information to be recorded, until the disk D has been changed to a disk having an available memory area. In addition to the disk drive unit 113, a hard disk drive HDD may be provided, which is suitable for recording and retrieval (playback) of massive information.

The information recording and playback section 111 is connected with an encoder 121 which encodes input information into a form recordable by the information recording and playback section 111, and a decoder 131 which decodes information outputted from the information recording and playback section 111 into a form displayable by an output device described below.

The encoder 121 is connected with an AV (Audio Video) input section 123 to which recording information, being image information or the like, can be inputted from the outside, and a tuner section 125 which receives images and sounds distributed from information distributors, such as broadcasters.

The decoder 131 is connected with an AV (Audio Video) output section 133 which supplies playback information decoded (by the decoder 131) to an output device, typified by a playback equipment (television) and a monitor.

The MPU 101 is also connected with a timer microcomputer section 141. The timer microcomputer section 141 receives an input signal from the recording and playback apparatus 1, or from an accompanying remote control terminal (remote control device) R. The input signal includes recording programming information such as recording (broadcasting) start date and time/recording (broadcasting) end date and time; recording source; and recording rate and recording system (sound recording system), etc (hereinafter simply referred to as "recording programming").

Further, the timer microcomputer section 141 is connected with a timer circuit (clock unit) 143 which manages time used for managing operation of the recording and playback apparatus 1, a radio clock receiving section 145 which receives standard time information from the outside, a switch control section 147 which turns on a main switch MSW, connected to a commercial power source, in response to the user's request, and a user operation input section 149 which receives an operation request (instructions) from the user.

The MPU 101 is also connected with a display section 151 which displays information inputted to the timer microcomputer section 141 or an operation state of the apparatus 1, a communications control section 103 which receives a recording programming from the outside and informs a designated destination whether the recording programming is acceptable or not, through a network NT, and a memory 105 which stores recording programming information and the like. Further, the communications control section 103 is provided with a memory (not shown) containing browser software (application software for enabling finding and browsing of information in a network) widely used in the network NT, a microcomputer (control unit, not shown), and a dialer which secures communications for transmitting mails to the outside under predetermined conditions.

The MPU 101 controls, recording, copying and deleting with respect to the disk D, and controls changes of operation of the recording and playback apparatus inputted to the timer microcomputer section 141 through the user operation input section 149, and display to the user with the display section 151, in accordance with a control program stored in the memory 105.

The main switch MSW keeps a secondary circuit (not shown), which operates the MPU 101 and the timer microcomputer section 141, always turned on, in the state being connected to the commercial power source. The main switch is a main-power internally-controllable type switch, which can start the main power inside the apparatus by operation of the switch by the user or by control of the timer microcomputer section 141.

The timer microcomputer section 141 manages the recording programming information set by the user, while monitoring the timer circuit (clock unit) 143, and instructs the MPU 101 to start recording when the programmed recording start time has come, and instruct the MPU 101 to end the recording when the programmed recording end time has come. Further, the timer microcomputer section 141 monitors time taken until a time-calibrating timing for calibrating the clock unit (timer circuit) 143, and turns on the main power of the main switch MSW a predetermined time before the time-calibrating timing and sets the radio time receiving section 145 to a standby state.

The switch control section 147 starts (turns on) the main switch MSW when it receives instructions from the timer microcomputer section 141 to turn on the main switch MSW, and keeps the main switch MSW on until it is instructed to turn off the switch.

The user operation input section 149 receives an operation request from the user, such as change of the operation of the recording and playback apparatus and reception of the recording programming information. The user operation input section 149 comprises a data receiving section which receives a control signal from the remote control device (remote control terminal) R, and a control signal input section (not shown) which outputs a control signal to the timer microcomputer section 141 in response to an instruction directly inputted by the user with an operation panel (not shown) of the main body of the apparatus 1.

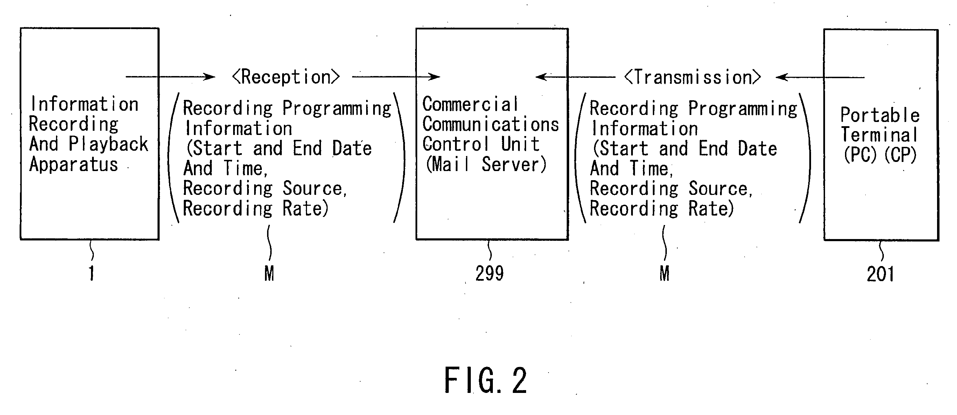

The following is an explanation of an example of operation in which recording programming information is inputted from a portable terminal 201, in the state where the main power of the recording and playback apparatus 1, that is, the main switch MSW is on by the user, with reference to FIG. 2.

As shown in FIG. 2, an existing communication apparatus (portable terminal) 201, represented by personal computers PC and cellular phones CP, transmits an E-mail (hereinafter simply referred to as "mail") M containing recording programming information from the user to a mail server (commercial communications control unit for network) 299. The recording and playback apparatus 1 distinguishes whether the body of the mail received from the mail server 299 contains a specific character string. If the mail contains the specific character string, the recording and playback apparatus 1 judges the character string to be programming information, and set a recording programming in the recording and the playback apparatus 1 itself. The mail server 299 holds mails M transmitted from the portable terminal 201, such that the communications control section 103 of the recording and playback apparatus 1 designated by the user can access the mails through the network NT shown in FIG. 1. Further, the recording programming information inputted from the portable terminal 201 is transmitted as a code string expressed in a predetermined form in the body of the mail.

In the state where the recording and playback apparatus 1 is powered, the recording and playback apparatus 1 can access the mail server 299 at time intervals set by the user.

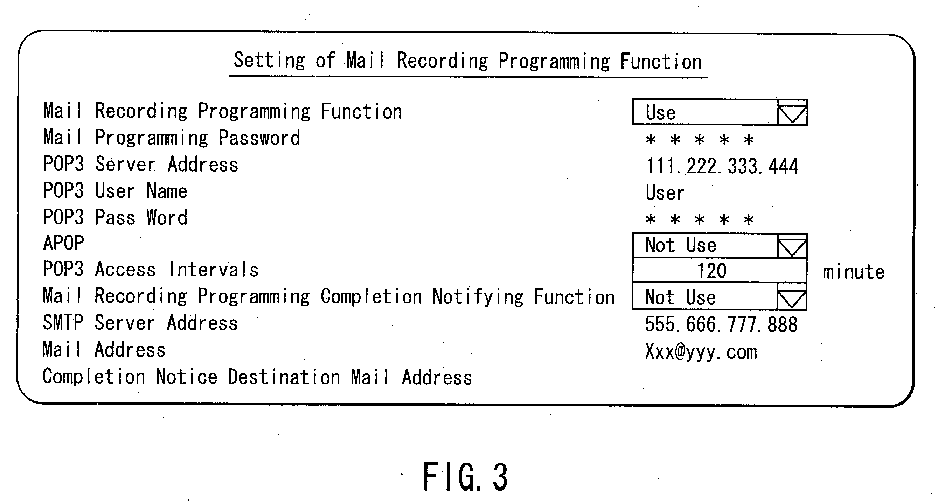

FIG. 3 shows an example of a display for setting a mail recording programming function. The item "POP 3 access intervals" on display indicates intervals of accesses to the mail server 299. In this example, it is set to "120 minutes". Thus, the recording and playback apparatus 1 accesses the mail server 299 and checks whether at least one new mail M have arrived, every 120 minutes from the point of time when the main switch MSW of the recording and playback apparatus 1 has been turned on.

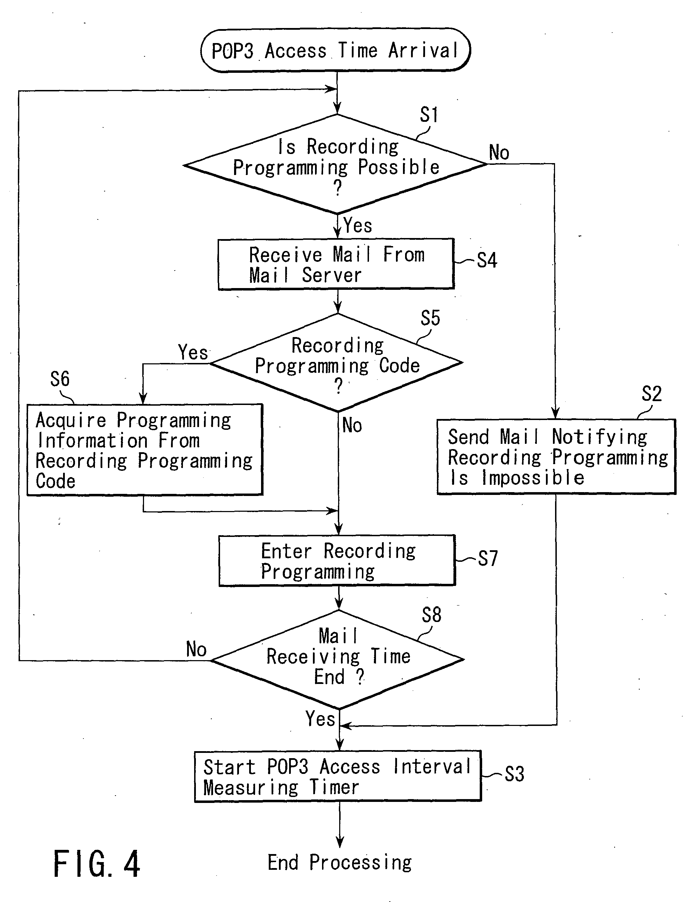

FIG. 4 is a schematic diagram showing an operation of the recording and playback apparatus, which is performed each access time.

When the time managed by the clock unit 143 has reached an access time, the MPU 101 checks the operation state of the recording and playback apparatus 1, and obtains from the memory 105 the number of programs which have already been set to be recorded, to judge whether a new recording programming is possible or not (S1). For example, if the number of the set programs is equal to the maximum number of recordable programs, no more recording programming cannot be entered, and thus the new recording programming is not accepted. Further, if a recording programming information table in the memory 105 cannot be updated since a programmed recording is being performed, etc., a recording programming cannot be set (S1-No).

If a recording programming is impossible, the apparatus sends a mail notifying that a recording programming is impossible (S2). Then, a POP3 access-interval-measuring timer is started (S3) for receiving mail M next time, and an access (mail receive) to the mail server 299 ends.

If a recording programming is possible (S1-Yes), the apparatus acquires the mail M from the mail server 299 (S4).

Then, to judge whether the mail M is a recording programming mail, it is checked whether the received mail M includes a line of character string beginning with a character string "open". If the mail M includes the character string "open", the apparatus judges the mail M to be a recording programming mail.

Specifically, if the apparatus receives a mail M having a description "open, pass, 20020830, 1000, 1200, 4, S, A", the character string "open" indicates that the mail is a recording programming mail, and it is regarded that the string "pass" indicates a password, the string "20020830" indicates the recording date being August 30, 2002, the string "1000, 1200" indicates that the recording is started at 10:00 and ended at 12:00, and the string "4, S, A" indicates that the channel number 4 is designated as the recording source, the image quality SP (standard recording mode) and the sound quality DD1 (Dolby Digital 1) are designated as the recording rate.

Since information defined by a predetermined decimal digits, for example 8-digit number may be a recording programming code called "G-code" in JAPAN, and called "VCR Plus+" in USA (United States of America) or in UK (United Kingdom) and called "SHOW VIEW" in French Republic and the Federal Republic of Germany, it is judged whether the number string following the string "pass" is a recording programming code or not (S5).

If the number string is a recording programming code, first four digits thereof indicate a number which does not correspond to a year of the Christian Era, and thereby the string is judged a recording programming code (S5-Yes). If it is a recording programming code, the recording start date and time, the recording end time, and channel number (the user does not need to select the recording source, in the case of using a recording programming code) is obtained therefrom. Therefore, the recording rate is then read (S6), and they are additionally entered in the recording programming information table in the memory 105 (S7).

If the number string is not a recording programming code (55-No), the recording start date and time, the recording end time, recording source and recording rate, which are necessary for a recording programming, are read from the mail M, and additionally entered in the recording programming information table of the memory 105 (S7).

Then, it is judged whether mail receiving time is ended or not (S8). If it is not ended and mail reception is continuable (S8-No), step S1 (judging whether a recording programming is possible) to step S8 are repeated. Judgment as to whether it is possible to continue mail receive is performed, if a certain time has passed since start of mail receive or the apparatus has received a user's request of canceling mail receive.

If mail receive has ended (S8-Yes), the apparatus starts the POP3 access-interval-measuring timer for receiving mails next time, and ends the operation (S3).

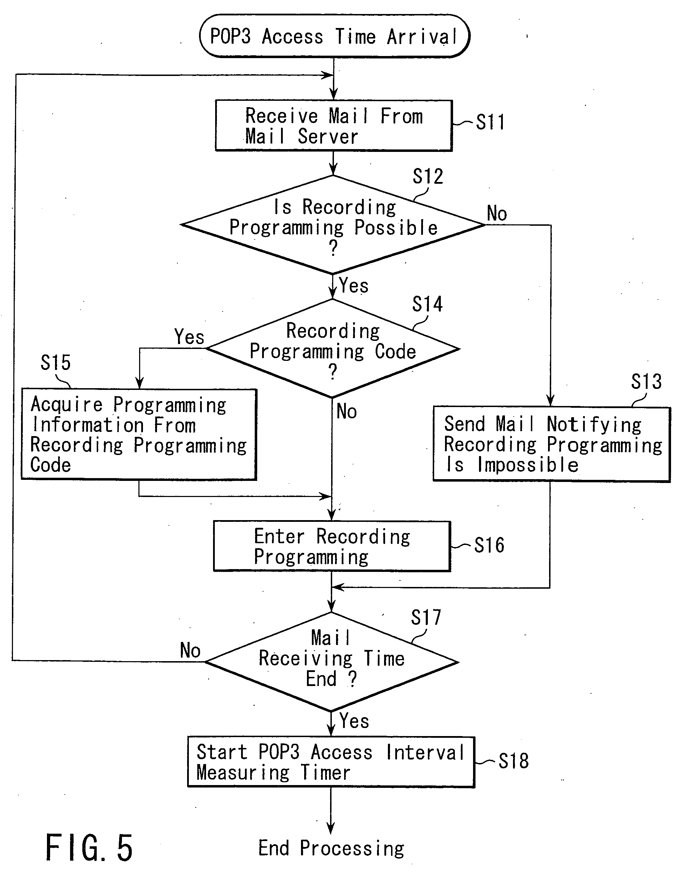

FIG. 5 shows a modification of the operation of the recording and playback apparatus, explained above with reference to FIG. 4. FIG. 5 is different from FIG. 4 in that the order of receiving mails from the mail server and judging whether a recording programming is possible or not is reversed, and in the processing performed when recording programming is impossible. The other parts of FIG. 5 are the same as those of FIG. 4.

In FIG. 5, when the managed time has reached an access time, first the apparatus accesses the mail server, and acquires a recording programming mail therefrom (S11).

After acquiring the recording programming mail, the apparatus judges whether a recording programming is possible or not (S12). If a recording programming is possible (S12-Yes), the recording programming is entered in the same procedure as in steps S5 to S8 shown in FIG. 4. Specifically, the apparatus judges whether the acquired mail includes a recording programming code or not (S14). If it includes a recording programming code (S14-Yes), the recording rate is then read (S15), and they are additionally entered in the recording programming information table in the memory 105 (S16). Further, if it does not include a recording programming code (S14-No), the apparatus reads the recording start date and time, the recording end time, the recording source and the recording rate, which are necessary for recording programming, from the mail M, and they are additionally entered in the recording programming information table in the memory 105 (S16).

If the recording programming is impossible although the apparatus has acquired the programming mail (S12-No), the apparatus sends a mail notifying that the recording programming by mail was not accepted (S13).

When the recording programming has been entered in the recording programming information table, the apparatus checks whether mail receive has ended or not (S17). If it has ended, the apparatus starts the POP3 access-interval-measuring timer for next mail receive, and ends the operation (S18).

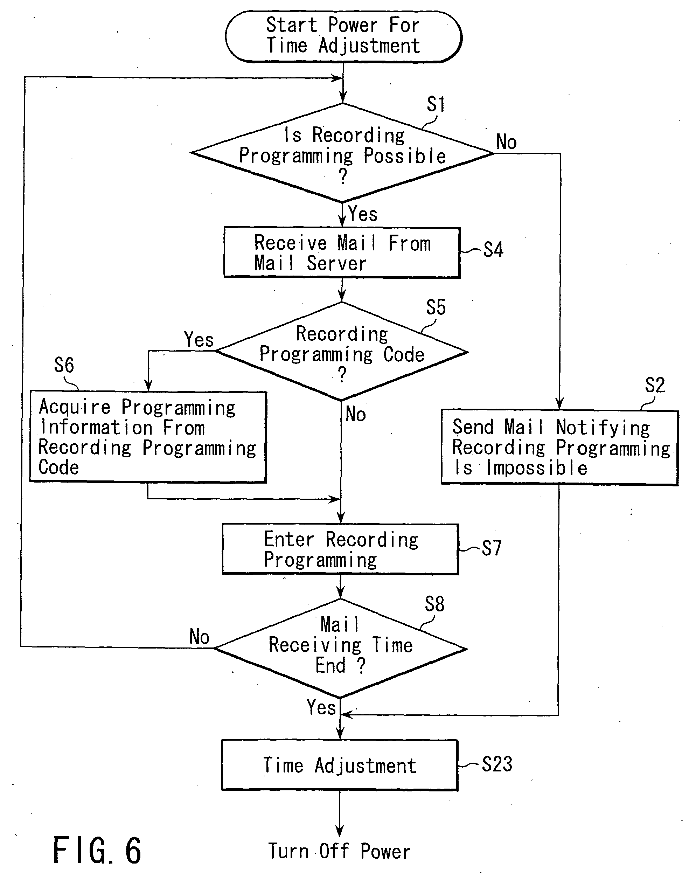

Next, operation of receiving recording programming information by using a mail in the state where the main power of the recording and playback apparatus is off will now be described with reference to FIG. 6.

In the recording and playback apparatus 1, when the time clocked by the timer circuit 143 has approached a preset time, the main switch MSW is started by control by the switch control section 147 (in response to instructions from the timer microcomputer section 141). Thereby, an internal power of the apparatus 1 is turned on to adjust or correct the time.

Since the internal power has been turned on to adjust or correct the time, a recording programming by mail is performed in the same procedure as explained above with reference to FIG. 4 or 5. Although FIG. 6 shows an example including the procedure of FIG. 4, the same effect is obtained in the case of including the procedure of FIG. 5.

Specifically, after a recording programming has been completed in accordance with the recording circuit 143 is calibrated in accordance with the standard time received by the radio clock receiving section 145 (S23).

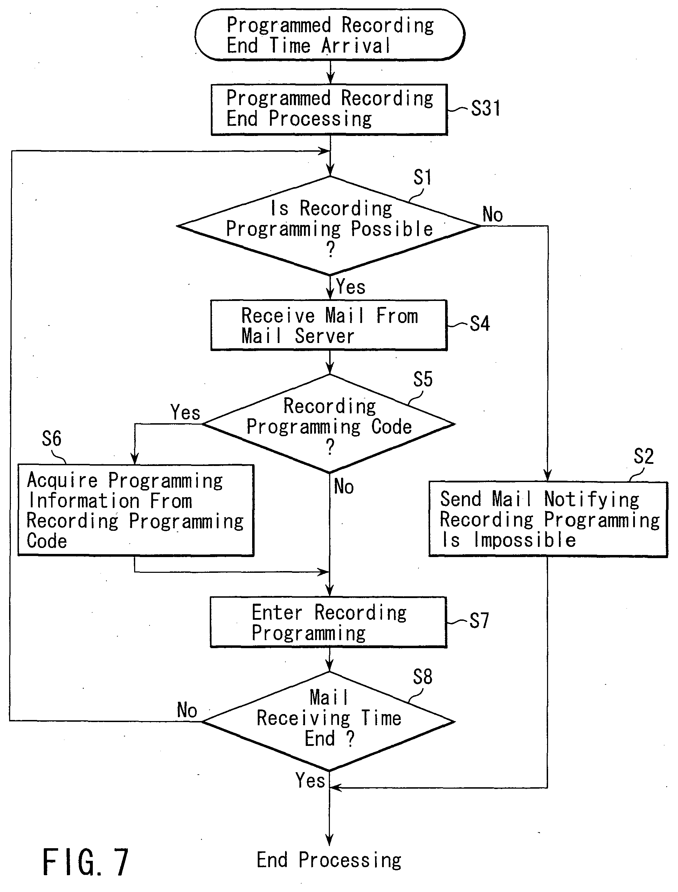

FIG. 7 shows an example of control which enables a recording programming by mail, in the case where recording programming is impossible although a programming mail has been received, since the recording and playback apparatus is recording a program.

As explained above, the recording programming information table in the memory 105 cannot be updated, while the apparatus is performing a recording in accordance with a preset recording programming. Therefore, even if the apparatus has received a mail M from the mail server 299, a recording programming cannot be entered.

Therefore, if the apparatus is performing a recording in accordance with the preset recording programming, when the recording end time of the programmed recording has come and the timer microcomputer section 141 sends a notice to end the recording, the apparatus performs recording ending processing (S31). Thereafter, the apparatus receives mail M in the same procedure as described above with reference to FIG. 4 or 5, and enters (sets) recording programming contents of the mail in the memory 105. Thereby, a new recording programming instructed by the mail M is set. Although FIG. 7 shows an example including the procedure of FIG. 4, the same effect is obtained if it includes the procedure of FIG. 5 instead.

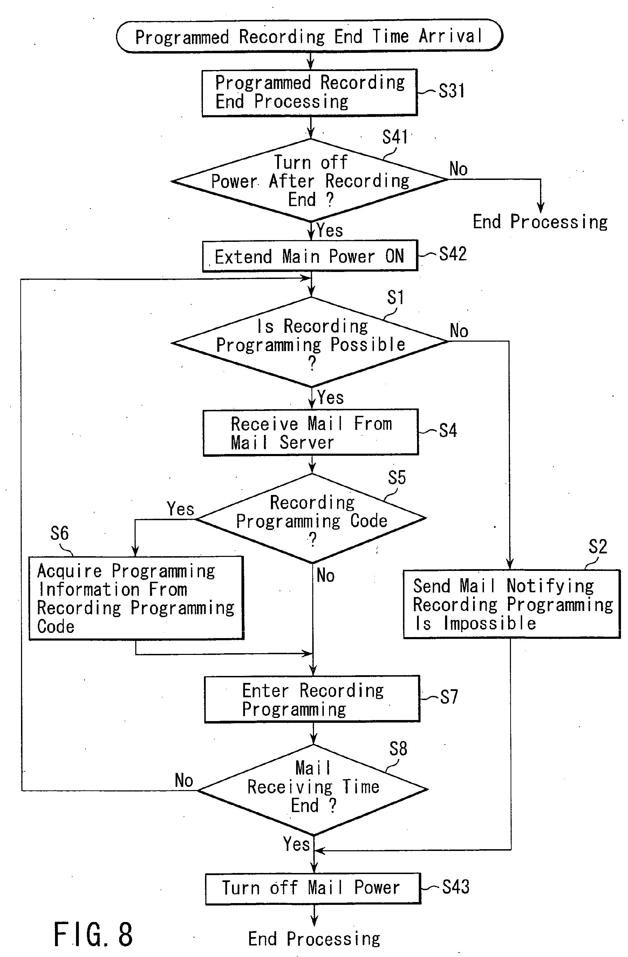

FIG. 8 is a schematic diagram showing a modification of the recording programming explained with reference to FIG. 7.

If the apparatus is performing a recording in accordance with the preset recording programming, when the recording end time of the programmed recording has come and the timer microcomputer section 141 sends a notice to end the recording, the apparatus ends the recording (S31). Thereafter, in many cases, the main power for the recording and playback apparatus 1 is turned off (the main switch MSW is turned off), until the recording start time of the next programmed recording comes. This state is the same as the procedure ending explained with reference to FIG. 7.

However, to receive a mail M and enter a recording programming, it is required that the main power of the apparatus is on. Therefore, when the previous programmed recording has been completed, the apparatus judges whether the apparatus has been set to turn off the power after a programmed recording has been completed (S41). If it is set to turn off the power after a programmed recording (S41-Yes), the apparatus instructs the switch control section 147 to extend the time that elapses before the main switch MSW is turned off (S42).

Then, the apparatus receives the mail M in the same procedure as explained above with reference to FIG. 4 or 5, and enters (sets) recording programming contents of the mail in the memory 105. Thereby, a new recording programming instructed by the mail M is set.

When the recording programming has been completed in accordance with the recording programming information, the MPU 101 instructs the switch control section 147 to turn off the main switch MSW, and the main power is turned off (S43).

As described above, in the recording programming operations shown in FIGS. 7 and 8, it is possible to set whether the main power is to be turned off or kept turned on after programmed recording, copy or delete of an image, and disk format, etc.

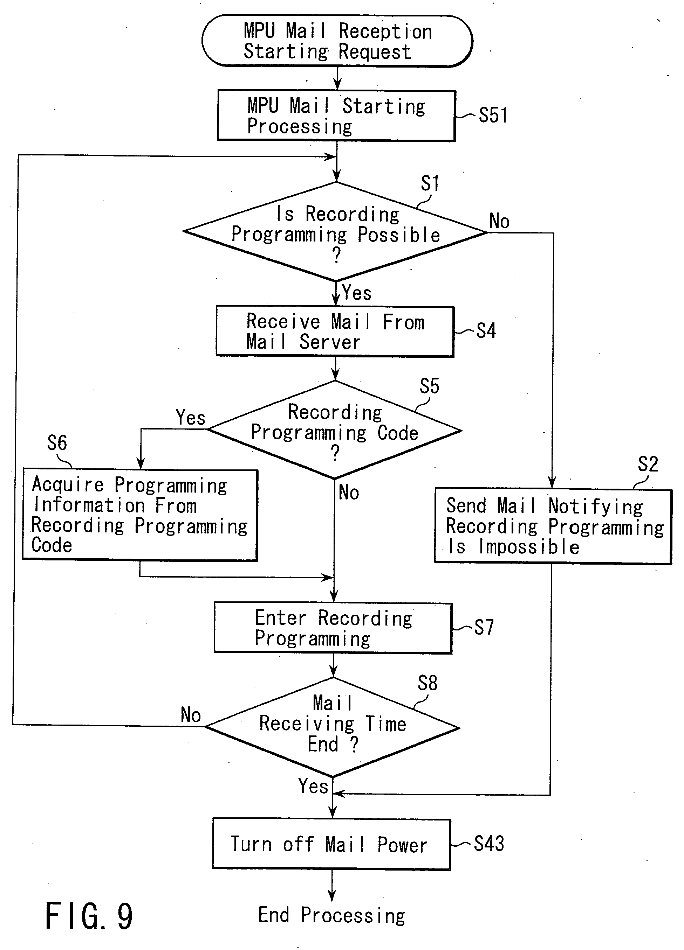

FIG. 9 is a schematic diagram showing another example of the recording programming operation by mail to the recording and playback apparatus, explained with reference to FIGS. 4 to 8.

When the mail server 299 has notified the MPU 101 of the recording and playback apparatus 1 that a new mail M from a cellular phone 201 or the like has arrived, even if the main switch MSW is off, the main switch MSW is turned on by the switch control section 147 to receive the programming mail, and thereby the apparatus 1 is started (S51). In such a case, to receive the mail, only the function of receiving mails and the function of performing recording programming may be started, unlike normal turn-on of the power (MPU mail starting processing).

Specifically, in the normal start of the apparatus, the apparatus performs routines, such as recognition of media (disk medium) inserted in the disk drive unit 113 and initialization of the encoder 121 and the decoder 131. In performing recording programming by mail, functions other than the function of receiving mails and the function of performing recording programming may be left unstarted.

Then, the apparatus receives mail M in the same procedure as described above with reference to FIG. 4 or 5, and enters (sets) recording programming contents of the mail in the memory 105. Thereby, a new recording programming instructed by the mail M is set.

When the programming in accordance with the recording programming information has been completed, the MPU 101 instructs the switch control section 147 to turn off the main switch MSW, and the main power is turned off (S43).

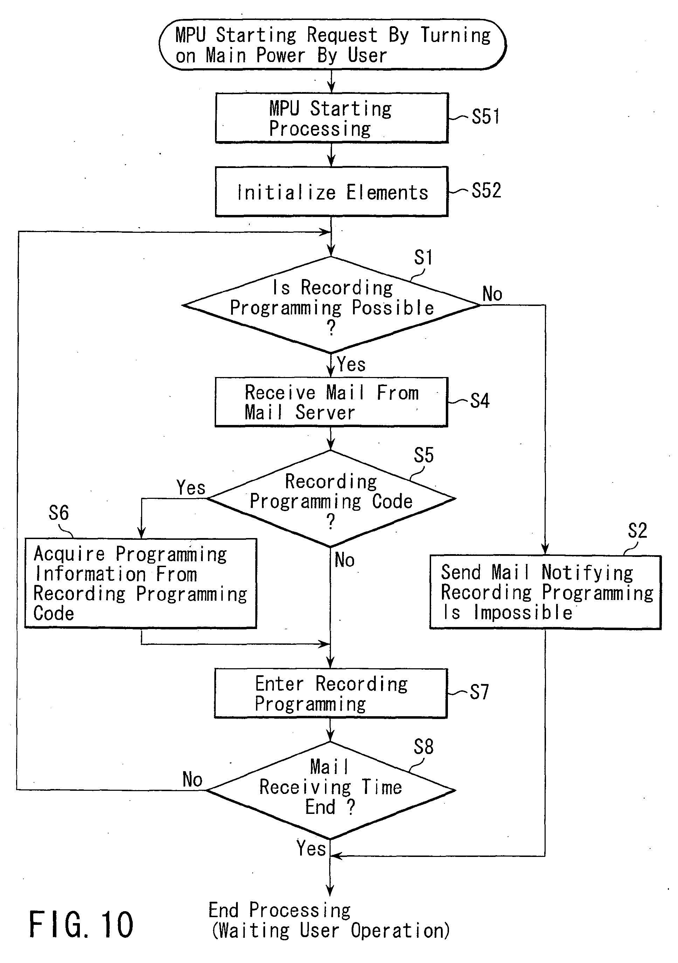

FIG. 10 is a schematic diagram showing another example of the recording programming operation by mail to the recording and playback apparatus, explained with reference to FIG. 9.

As shown in FIG. 10, from the state in which the main power of the recording and playback apparatus 1 is off, the main power of the apparatus 1 is turned on by turning on the main switch MSW by user's operation, and thereby normal starting processing (MPU starting processing) is performed (S61).

In MPU starting processing, starting the encoder 121 and the decoder 131, resetting the disk drive unit 113, and recognizing media and the like are performed in accordance with a predetermined initializing sequence (S62).

After the MPU starting processing, before enabling reception of control signals corresponding to key operation by the user, the apparatus receives mail M in the same procedure as described above with reference to FIG. 4 or 5, and enters (sets) recording programming contents of the mail in the memory 105. Thereby, a new recording programming instructed by the mail M is set.

As described above, according to the present invention, it is possible to acquire a recording programming mail containing recording conditions, even under various operation conditions of the apparatus, and thus recording programming by mail can be securely entered. For example, a recording programming mail is acquired: at regular time intervals while the main power of the recording and playback apparatus is on; at the time of time-adjusting operation if the main power is off; when completion of operation, such as recording in accordance with the recording programming stored in the memory, during which the recording data cannot be updated; when a new recording programming mail has been received during waiting state (the main power is off); at regular time intervals when the apparatus is on standby with the main power off; and at the time of starting by turning on the main power.

Further, it is possible to set a recording programming by E-mail even if the main power is not kept turned on, by acquiring a recording programming mail when the internal power of the recording and playback apparatus is turned on for time adjustment, in the stand-by,state with the main power off.

Furthermore, it is possible to set a recording programming by E-mail even if a recording programming was not accepted by a periodical processing, by acquiring the recording programming mail after the operation during which recording programming is impossible.

It is also possible to set a recording programming by E-mail even in the case where the power is off before operation of periodical processing, by acquiring a recording programming mail at the time of completion of an operation, at completion of which the apparatus is set to be turned off.

It is also possible to set a recording programming by E-mail even if the main power is not on, by turning on the power if the mail server has received a new mail when the main power of the recording and playback apparatus is off, and acquiring the recording programming mail.

It is also possible to set a recording programming by E-mail even if the main power is not on, by turning on the internal power of recording and playback apparatus at regular time intervals when the main power is off, and acquiring a recording programming mail.

It is also possible to set a recording programming by E-mail, by acquiring a recording programming mail when the main power of the recording and playback apparatus is turned on.

Therefore, it is possible to set recording start time and recording end time of information even under conditions in which recording programming by using the apparatus main body or the remote control device is difficult, and it is possible to prevent failing in recording due to the user's being in a position distant from the apparatus.

## Claims

1. An information recording and playback apparatus **characterized by** comprising:
an information recording and playback section (111) which records information on a recording medium, and plays back prestored information from a recording medium;
a timer section (141) which operates the information recording and playback section at a predetermined operation starting time, and stops the information recording and playback section at a predetermined operation ending time;
a memory section (105) which holds operation information of the timer section;
a communications control section (103) which inputs and sets the operation starting time and the operation ending time to the timer section from outside;
a main-power internally-controllable switch (MSW), which always energizes to the timer section, and selectively energizes to the information recording and playback section and the communications control section by external operation or management of the timer section;
a radio clock section (145) which receives a standard value used for time correction of the timer section from the outside; and
a main control section (101) which controls operations of the information recording and playback section, the timer section, the main-power internally-controllable switch and the radio clock receiving section, with reference to the operation starting time and the operation ending time supplied through the communications control section.

2. An information recording and playback apparatus according to claim 1, **characterized in that**
the communications control section (103) acquiring information corresponding to the operation starting time and the operation ending time of the timer section, by receiving an instruction supplied in mail form from the outside.

3. An information recording and playback apparatus according to claim 1, **characterized in that**
the communications control (103) section acquiring information corresponding to the operation starting time and the operation ending time of the timer section by receiving, when a main power is turned on by control by the timer section, an instruction supplied in mail form from the outside.

4. An information recording and playback apparatus according to claim 3, **characterized in that**
the main power being turned on by control of the timer section (141) at the time of starting a main power to correct the time of the timer section by the radio clock section (145).

5. An information recording and playback apparatus according to claim 1, **characterized in that**
the communications control section (103) acquiring information corresponding to the operation starting time and the operation ending time of the timer section by receiving, if a main power is turned on by control by the timer section and the information recording and playback section is being operated, an instruction supplied in mail form from the outside when the operation of the information recording and playback section has been completed.

6. An information recording and playback apparatus according to claim 1, **characterized in that**
the communications control section (103) writing the operation information of the timer section into the memory section, by turning on the main-power internally-controllable switch, if an instruction supplied in mail form from the outside in the state where a main power is off by control by the timer section includes an instruction to turn on the main-power internally-controllable switch.

7. An information recording and playback apparatus which records and plays back video data, the apparatus **characterized by** comprising:
means (103) for receiving a recording programming mail including recording programming contents from outside in a predetermined condition; and
means (101) for entering a recording programming in accordance with a recording programming contents in a programming mail acquiring by the receiving means.

8. An information recording and playback apparatus according to claim 7, **characterized by** further comprising:
means (141) for designating an interval between receives of recording programming mail by the receiving means.

9. An information recording and playback apparatus according to claim 7, **characterized in that** the condition of receiving the recording programming mail by the receiving means (103) is a timing, when an internal power is turned on in the state where a main power is off.

10. An information recording and playback apparatus according to claim 7, **characterized in that** the condition of receiving the recording programming mail by the receiving means (103) is a timing, when an operation, during which recording programming is impossible, has been completed.

11. An information recording and playback apparatus according to claim 7, **characterized in that** the condition of receiving the recording programming mail by the receiving means (103) is a timing, when an operation has been completed, if the apparatus is set to be turned off after the operation.

12. An information recording and playback apparatus according to claim 7, **characterized in that** the condition of receiving the recording programming by the receiving means (103) is a timing, by turning on an internal power for a predetermined time at regular intervals in the state where a main power of the apparatus is off.

13. An information recording and playback apparatus according to claim 7, **characterized in that** the condition of receiving the recording programming by the receiving means (103) is a timing, when a main power has been turned on.

14. A method entering and acquiring a recording programming contents from outside with a recording programming mail using an information recording and playback apparatus comprising:
receiving a recording programming mail including recording programming contents from outside; and
entering a recording programming in accordance with a recording programming contents in a programming mail acquiring by a receiving means.
